# EUROPEAN PATENT APPLICATION

(11) **EP 3 386 059 A1**
(43) Date of publication of application: **10.10.2018**
(21) Application number: 17165241.5
(22) Date of filing: 06.04.2017
(51) Int. Cl.: H02J 3/14, H02J 3/32, H02J 3/38, B60L 11/18

(54) **METHOD AND SYSTEM FOR PROVIDING ANCILLARY GRID SERVICES**

(71) Applicant: ABB Schweiz AG, 5400 Baden (CH)
(72) Inventor: Zanarini, Alessandro, 5400 Baden (CH); Warner, Bruce, 1170 Aubonne (CH); POLAND, Jan, 5415 Nussbaumen (CH); Mercangoez, Mehmet, 4332 Stein (CH); Lassus, Thierry, 1255 Veyrier (CH)
(74) Representative: ABB Patent Attorneys

(57) **Abstract**

A method for operating an ensemble of electric assets powered by a set S of rechargeable electric storage units is disclosed, said assets being configured to perform a primary purpose, unrelated to storage or provision of electric energy, in particular a transportation task, according to a pre-determined schedule, the method including the steps of
a) selecting, at a time to, based on the schedule, a first subset S₁ of the rechargeable electric storage units for providing ancillary grid services to a grid operator during an interval of time [*t*₁, *t*₂] in a future of to;
b) determining, based on properties of the subset S₁, related to the ancillary services;
c) communicating said specifications to a grid operator;
d) during the interval of time [*t*₁, *t*₂], providing ancillary grid services in accordance with the specifications, wherein at least a second subset S₂ of rechargeable electric storage units, said second subset being a subset of the first subset S₁, preferably being identical to the first subset, is used to store or supply electric energy, wherein
e) a state of health, in particular a remaining expected lifetime, for each electric storage unit of a third subset S₃ of electric storage units, preferably all rechargeable electric storage units, is taken into account in the selection in step a).

## Description

### FIELD OF THE INVENTION

The invention pertains to the field of ancillary grid services. In particular, it relates to a method and a system for providing ancillary grid services using a plurality of rechargeable electric storage units, said devices being configured to perform a primary purpose unrelated to storage or provision of electric energy, in accordance with the independent patent claims.

### BACKGROUND OF THE INVENTION

In many parts of the world, renewable power resources, in particular wind and solar resources are being added to an electric power mix in an ever increasing manner. Such resources are also frequently referred to as distributed energy resources (DERs). An uncontrollable nature of such renewable power resources create challenges for an operation of power grids which transmit and/or distribute electricity produced using such resources.

Electrical energy cannot easily be stored in large amounts within an electricity distribution network, commonly referred to as a grid, by conventional means. Therefore an amount of electrical energy fed into the grid must, at any given moment, precisely match an amount being used, i.e. being taken out of the gird, to guarantee secure operation at a given, constant frequency (e.g. 50 Hz in Europe). Unexpected fluctuations between the feed-in and take-out, or generation and consumption, of electrical energy into/out of the grid must therefore be compensated for on short time scales. This may, in particular, be achieved by rapidly increasing or reducing feed-in by suppliers, e.g. power plant operators, who for this purpose, are required to foresee reserve energy in form of a so-called control reserve, in particular an active power control reserve. This is frequently also referred to as frequency power control or (active power) grid control

Reserve energy is required when, in a current capacity balance of a control area, a sum of an actual feed-in and/or take-out deviates from a sum of the expected capacities. Such a deviation can originate on a load side of the grid - for instance as a result of meteorological factors, and/or inaccuracy in the load forecast - or on a production side - for example due to production restrictions or stoppages, or additional output, e.g. from hydroelectric power plants due to heavy precipitation. Grid operators are therefore required to continually use control power for offsetting balance capacity variations in its control area. This may technically be achieved by a three-stage regulation procedure comprising primary, secondary, and tertiary frequency control, as e.g. provided in the technical specifications of the European Network of Transmission System Operators for Electricity ENTSO-E (UCTE, which until July 1999 was known as UCPTE (Union pour la coordination de la production et du transport de l'électricité), which was incorporated into ENTSO-E on 1 July 2009 and continues to exist as "Regional Group Continental Europe").

In terms of present grid operation practices, active power control for power system dynamic frequency support is divided into separate control regimes operating on various time scales. Primary Frequency Control (PFC), also briefly referred to as primary control, aims at restoring a balance between power generation and consumption on a time scale of seconds of a deviation occurring, with active power delivered e.g. being a function of a frequency deviation *f-f_{target}.* During PFC operation, the frequency is stabilised within permissible limit values. In conventional power stations, activation takes place directly by means of turbine regulators. The network frequency is being monitored and, in case of deviations, the required primary control power needed is activated.

In addition, secondary frequency control or Automatic Generation Control (AGC), also briefly referred to as secondary control, attempts at restoring the grid frequency to the scheduled value by acting on the cause of the disturbance on a time scale of minutes. Secondary control is typically activated after a few seconds, in particular after between 1 and 30 seconds, preferably between 2 and 5 seconds, and is typically completed after 10 and 30 minutes, preferably after 12-18 minutes. If the cause of the control deviation is not eliminated this time, secondary control is replaced by tertiary control. Generally secondary frequency control power in the connected power stations is automatically actuated by a central grid controller. This requires these power stations to be in operation but not to be generating at a maximum or minimum possible nominal capacity, to be able to meet requirements of the central load frequency controller at all times.

Tertiary frequency control, also briefly referred to as tertiary control, may be provided to disburden secondary frequency control, in particular in order to restore a sufficient reserve for secondary frequency control. The tertiary control reserve is primarily intended for adjusting major, persistent control deviations, in particular deviations occurring in connection with production outages or unexpectedly long-lasting load changes. Activation may, e.g., be triggered by electronically transmitted messages to suppliers, who are then required to adjust power plant production, typically within a time scale between 10 and 30 minutes, preferably within 12-18 minutes.

Frequency control is only one of many transmission or distribution service. Other examples include voltage support, peak shaving, load levelling, energy arbitrage, black start support, feeder decongestioning, etc.

All of them require a commitment of some service provider to the grid operator. The grid operator then triggers the service via some control signal. In a sense the setup is quite similar, though the application may be different. In some distribution services, there might not be an open auction but rather bilateral agreements.

As a consequence of the uncontrollable nature of renewable resources grid operators aiming to incorporate such resources into their grids are seeking support from providers of so-called ancillary grid services (also referred to as ancillary services for brevity), in particular in the form of primary, secondary, and/or tertiary control as described above. At the time of writing, provision of the primary and/or secondary control ancillary services for various grid operators around the world is thus considered a potentially attractive business. Investments in so-called battery energy storage systems (BESS) are thus being made in order to be able to offer respective services. Alternatively, battery energy storage systems may also be employed to perform power peak shaving and/or to strengthen the power transmission and distribution grids. On this basis, investments in battery energy storage systems may allow for delaying much more extensive investments that become necessary when a capacity limit of existing grid capacities is or is about to be reached.

Electrochemical batteries, briefly referred to as batteries in what follows, which generally form the basis of battery energy storage systems, age over time. Battery aging is a complex process, which takes place even if a battery is not utilized at all. Aging progresses faster as the battery is cycled, i.e. repeatedly charged and discharged. The impact of the respective charge/discharge cycles is cumulative over time and their impact on aging is greater as electrochemical and thermal stress on a battery increases, for example via higher rates of charging or discharging, or too low or too high states of charge, which all lead to some extent of irreversible physical and chemical changes inside the battery cells. Therefore, an aging behavior heavily depends on a cell design and chemistry of the battery, but also on a way according to which it is operated. Aging leads to increased losses but, more importantly, it reduces a capacity of the battery to hold charge, which in turn reduces both the power and the energy the battery can provide. Since power and energy are critical aspects of services intended to be provided by a battery, aging effects need to be carefully considered at various stages, in particular at a design phase.

Electrochemical batteries may also be employed to substitute fossil fuels as an energy carrier in transportation applications, e.g. in electrical buses for public transportation services. The substitution of fossil fuels for public transportation services has important benefits, such as cleaner air in cities and reduced noise levels. One particular property of public transportation services is that they are heavily time varying. As described very well with the term rush-hour, the demand for public transportation can be very high at certain times over a day. At other times, the service might be infrequently needed or might not be operational at all. This means many electrical buses and onboard and/or wayside batteries needed to provide the service at peak hours will be idle for long durations during off-peah periods over a 24h-day.

It has been suggested to use such batteries during said idle periods to provide ancillary services using an electric power storage capacity of the batteries. However, such schemes are based on a momentarily availability and/or non-availability of batteries. Thus, medium and long-term planning based on such schemes is possible to a limited degree only, so that the full potential of the available batteries to contribute to the provision of ancillary services cannot be exploited.

### SUMMARY OF THE INVENTION

It is thus an objective of the invention to provide a method and a system which overcome the disadvantages as discussed above. This objective and further objectives are solved by a method, as defined in independent claim 1, and by a system as defined in claim 15.

The invention comprises a method for operating an ensemble of electric assets powered by a set S of rechargeable electric storage units, said assets being configured to perform a primary task, said primary task preferably being unrelated to storage or provision of electric energy, in particular a transportation task, according to a pre-determined schedule, the method including the steps of
a) selecting, at a time *t*₀, based on the schedule, a first subset S₁ of the rechargeable electric storage units for providing ancillary grid services to a grid operator during an interval of time [*t*₁, *t*₂] in a future of to;
b) determining, based on properties of the subset S₁, specifications related to the auxiliary services;
c) communicating said properties to a grid operator;
d) during the interval of time [*t*₁, *t*₂], providing ancillary grid services in accordance with the specifications, wherein at least a second subset S₂ of rechargeable electric storage units, said second subset being a subset of the first subset S₁, preferably being identical to the first subset, is used to store or supply electric energy,
e) determining, for each electric storage unit of a third subset S₃ of electric storage units, preferably all electric storage units, a state of health, and taking the determined states of health into account in the selection in step a).

The method in accordance with the invention may preferably be implemented on a computer, a microcontroller, or a supervisory control and data acquisition (SCADA) system. The method may also be deployed through cloud computing, in particular through network-based computing including, in particular, sharing of computer processing resources, data, storage, gateways, interfaces and other devices over a computing network, in particular an internet, on demand.

The ensemble of electric assets may, in particular, comprise land-, water- or airborne vehicles, in particular public transport vehicles, e.g. buses or trains, trucks, off-road vehicles, forklifts, robots for loading and unloading of goods, agricultural machines, ferries, drones, etc. which may at least partially be powered by one or more of a set, in particular a plurality, of rechargeable electric storage units, of which at least some are preferably installed, mounted or otherwise provided on or as part of each of the vehicles. Vehicles may at least partially, temporarily or occasionally, be self-driven. At least some rechargeable electric storage units may additionally or alternatively be provided at or along one or more paths usually being followed by the vehicles, in particular in the form of so-called way-side batteries. Way-side batteries may be used for flash charging the vehicles, in particular on-board electric storage units provided on or as part of the vehicles, in a few seconds, allowing to reach high power ratings without the cost that would be incurred in case of charging them directly from the grid.

The assets may, in particular, also comprise lighting or heating equipment, equipment for processing of goods, in particular in laboratory, industrial or agricultural environments.

As becomes clear from the above, the assets preferably have a primary purpose, and are thus capable of performing a primary task, that is unrelated to storing of electric energy. In particular such a primary purpose may be fulfilled by a provision or performance of work, in particular mechanical work, by or through the assets, whereby the assets are at least partially and/or temporarily powered by means of or from the rechargeable electric storage units.

The assets operate, in particular perform their primary task, according to some schedule which in general is fixed, set-up and/or otherwise determined at a time *t*_{schedule} in advance of their operation, in general at least days, but often weeks or even months in advance. The schedule may be an hourly, daily, weekly and/or monthly schedule that is periodically repeated once a respective period has expired. In particular for the case of public transport vehicles, the schedule may be a timetable comprising a plurality of locations, in particular stops, served by one or more of the public transport vehicles, together with times at which said public transport vehicles are to arrive and/or depart from said locations. The timetable may also triggered by an event, in particular in the case where the assets are forklifts, robots for loading or unloading, agricultural machines, etc. More general, the schedule may comprise a plurality of events that are intended, planned or otherwise foreseen to occur at one or more of a plurality of given times and/or dates.

Once the schedule is fixed, i.e. at any time to after *t*_{schedule}, a first subset S₁ of the rechargeable electric storage units may be selected for providing ancillary grid services to a grid operator during an interval of time [*t*₁, *t*₂] in a future of *t*₀, i.e. with *t*₁ ≥ *t*₀*,* preferably *t*₁ > *t*₀. The selection is preferably carried out by a planning unit, which may in particular comprise an ensemble-wide optimizer, i.e. an optimizer configured, possibly amongst other aspects, to find an optimum selection of storage units that may be selected for providing ancillary grid services while at the same time allowing the assets to serve their primary purpose in accordance with the schedule.

Subsequently or simultaneously, specifications, in particular quantitative specifications related to the ancillary service to be provided during the interval of time [*t*₁, *t*₂] are determined. Such specifications, may, in particular, comprise indications of a minimum and/or maximum amount of current, power and/or energy that may be provided and/or absorbed by the first subset S₁ of rechargeable electric storage units as selected. Specifications may also be determined in form of a so called participation level.

Once specifications have been determined, they are communicated to the grid operator. In general, by communicating the specifications, a commitment, in particular a binding commitment is made to provide ancillary services in accordance with the specifications as communicated during the interval of time [*t*₁, *t*₂]*.*
In general, a benefit is awarded by the grid operator in return to commitment to provide ancillary services at a future time, in particular during the interval of time [*t*₁, *t*₂]*.* The benefit may be provided in form of an amount of electric power that may, in particular, be used to power the electric assets. In particular, the electric power may be provided freely or at a reduced rate during times outside the interval [*t*₁, *t*₂], in particular at a future of *t*₂. The benefit may also be provided in form of a financial benefit, in particular remuneration. The benefit may quantitatively depend on the specifications related to the ancillary service. In particular, a height of the remuneration may depend on the minimum and/or maximum amount of current, power and/or energy that may be provided and/or absorbed or on the participation level, in particular in a monotonously increasing manner.

The specifications related to the ancillary services may be communicated to the grid operator, which may be a microgrid operator. Alternatively, the specifications may also be communicated to a utility operator or to a so called aggregator. An aggregator may, in particular, be defined as a company who acts as an intermediary between electricity end-users and DER owners and power system participants who wish to serve these end-users or exploit the services provided by these DERs, wherein the definition of an aggregator may be restricted or expanded depending on regulations that define the roles and activities that aggregators can perform, cf., e.g., Scott Burger et al. in The Value of Aggregators in Electricity Systems, CEEPR WP 2016-001, MIT Center for Energy and Environmental Policy Research. According to Burger et al., aggregation is defined as an act of grouping distinct agents in a power system (i.e. consumers, producers, prosumers, or any mix thereof) to act as a single entity when engaging in power system markets (both wholesale and retail) or selling services to the system operator(s). The specifications may be communicated directly to one of the recipients as detailed above, or through or via a bidding platform of an ancillary service market.

During the interval of time [*t*₁, *t*₂], ancillary grid services are subsequently provided in accordance with the specifications related to the ancillary service as communicated to the grid operator earlier, wherein at least a second subset S₂ of rechargeable electric storage units is used to store and/or supply electric energy. The second subset S₂ is preferably, but not necessarily, identical to the first subset S₁. In particular, the second subset S₂ preferably comprises an identical number of rechargeable electric storage units having identical specifications as the electric storage units from the first subset S₁. The second subset S₂ may preferably also be a subset of the first subset S₁. This allows for taking into account for unexpected unavailability of one or more electric storage units from the first subset S₁, which may, in particular, occur in cases of deviations from, in particular a lag behind, the schedule. The ancillary grid services may be provided under control of a real-time control system or unit, which preferably also controls operation of the or those assets serving the primary purpose.

The term "providing", in the context of ancillary services, may indicate that such services are in fact provided in accordance with, in particular to an extent corresponding to the specifications as determined and communicated to the grid operator, in particular that minimum and/or maximum amount of current, power and/or energy that are provided and/or absorbed. It may also indicate that services are only held ready in accordance with, in particular to an extent corresponding to the specifications as determined and communicated to the grid operator, with actual amounts of current, power and/or energy that are provided and/or absorbed below minimum and/or maximum amounts as communicated.

In accordance with the invention, a state of health for each electric storage unit of a third subset S₃ of electric storage units, preferably of all electric storage units, is taken into account in the selection. In particular, a current state of health of electric storage units from the third subset S₃, preferably of all electric storage units, is determined or estimated at to. State of health of an individual electric storage unit may in particular be represented by a remaining expected lifetime, and is thus representative of ageing or so called wear and tear of the respective individual electric storage unit. Alternatively or in addition, an expected state of health at time *t*₁ may be taken into account in the selection. The selection may be made with the aim of balancing state of health over the third subset S₃, preferably over all electric storage units, in particular by prioritizing a selection of electric storage units with better state of health, in particular with more remaining expected lifetime, with respect to electric storage units with a worse state of health, in particular with less remaining expected lifetime. This may in particular allow for deferring maintenance, refurbishment and/or replacement of the assets and/or of electric storage units as far as possible.

The selection may alternatively be made with the aim of staggering state of health, in particular a remaining expected lifetime, over the third subset S₃, preferably over all electric storage units. This may in particular allow for executing maintenance, refurbishment and/or replacement of electric storage units and/or assets they are provided on or as part of with a minimum impact on performing the primary task, as maintenance, refurbishment and/or replacement may be carried out consecutively for only a small number, in particular only one, of the assets and/or of electric storage units at each time.

The selection may also be made with the aim of expedited consumption of remaining expected lifetime of one or more individual electric storage units. This may be beneficial if it is desired to carry out maintenance, refurbishment and/or replacement of the one or more individual electric storage units at some point in time in the near future. It may be particularly beneficial if maintenance, refurbishment and/or replacement of one or more individual electric assets is due or will become due in a near future for reasons unrelated to the electric storage units for, in particular provided in or on said individual electric assets, as it allows for combining maintenance, refurbishment and/or replacement of asset and electric storage unit without disposing of unused remaining expected lifetime.

This allows for ameliorating a situation where, if certain assets from the ensemble, in particular buses in the fleet, are used repeatedly both for higher primary purpose, in particular transportation, service and for ancillary service provision, some assets in the ensemble, in particular vehicles in the fleet, are underutilized while others might not be able to sustain service until the planned end-of-life.

In case the electric storage units are electrochemical batteries, there is in general no economic possibility of maintenance to restore back the effects of aging but it is possible to varying degrees of accuracy to measure a state of health for a given battery system. One possibility is to follow a predetermined calibration cycle either on demand or on specific intervals and use the time trajectory of the measurements to determine the state of health. Another possibility is to use state estimation or machine learning methods such as pattern matching to compare the patterns of measurements from normal operation against calibration data to infer the battery state of health. Preferably, a real-time monitoring unit or system is provided for monitoring state of health of individual electric storage units, preferably for each of the electric storage units, which preferably is adapted for scheduling and issuing test commands and preferably comprises a data historian - e.g., a logging system for recording historical process and/or system data - for receiving and recording data to keep track of the state of health of the batteries in e.g. a complete fleet of public transport vehicles. To add to this point, in the case of electrical bus solution that involves dedicated wayside infrastructure also comprising electrochemical batteries, these storage components may also be included within the reach of the described real-time monitoring system and historian and be treated in a very similar way, if they comprise electrochemical batteries.

By taking into account a schedule as described above, selection of the first subset S₁, determination of specifications related to the ancillary service, and communication of said specifications may be effected long in advance of actually providing the ancillary services. This allows grid operators, utility operators and/or aggregators to more reliably plan their future operations, and ensure better service quality. On the other hand, it allows for increasing, maximizing and/or optimizing a benefit, in particular remuneration that may be obtained in return for providing ancillary services. In particular, this may be achieved if selection of the first subset S₁, determination of specifications related to the ancillary service, and communication of said specifications are effected more than one day, preferably more than one week, i.e. with *t*₁ - *t*₀ > 1 d, preferably *t*₁ - *t*₀ > 7d, ahead of providing ancillary services, and/or by choosing *t*₁ - *t*₀ *> t₂* - *t*₁, preferably *t*₁ - *t*₀ >> *t*₂ - *t*₁*.*

In ancillary service provision - specifically for secondary frequency control - participants are often required to bid a certain duration ahead of time for a certain participation level, e.g. ±5 MW. If the participant is an aggregator, sub-participants can be foreseen to do the same, which is to commit to a certain participation level. In the case of using a spare capacity of electric assets, in particular batteries of a fleet of public transport vehicles, to provide the ancillary service, it is essential to have an accurate estimation of what the spare capacity actually is. Since the capacity is formed by the fleet - it is again essential to have the state of health information from all fleet members as it affects directly the residual battery capacity. Moreover, since the aging and the change in state of health over time is a function of the degree of utilization of the spare capacity, feedback may be involved in the decisions, meaning the past decisions on participation level influence the future capability not only to provide the ancillary service but also could affect the primary purpose of transportation.

As indicated above, an expected influence of the provision of ancillary services in accordance with the specifications on the states of health, in particular on a remaining expected lifetime, of electric storage units, in particular from the first subset S1, may be taken into account when selecting said subset S1, and/or in determining the specifications related to the ancillary services. This allows for taking into account an effort, in particular an effective effort related to a degradation of the state of health, in particular a consumption of remaining expected lifetime, which may in particular comprise a cost for maintaining, refurbishing and/or replacing of electric storage units whose expected lifetime has expired. On this basis, a net benefit may be determined.

Similarly, an expected influence of the provision or performance of the primary task, in particular during the interval of time [*t*₀*, t*₁] on the states of health, in particular on a remaining expected lifetime, of electric storage units, in particular from the first subset S1, may be taken into account when selecting said subset S1, and/or in determining the specifications related to the ancillary services. This allows for taking into account an effort, in particular an effective effort related to a degradation of the state of health, in particular a consumption of remaining expected lifetime, which may in particular comprise a cost for maintaining, refurbishing and/or replacing of electric storage units whose expected lifetime has expired. On this basis, a net benefit may be determined.

In a preferred variant of the method in accordance with the invention,
i) requirements for at least one of the storage units from the first subset S₁, in particular a minimum charge level and/or maximum charge level required at t₂ are determined in step a) from specifications related to the primary purpose;
ii) a time *t*_{2'} with *t*₁< *t_{2'}< t*₂, preferably with *t*₂*- t*_{2'} *< t_{2'}- t*₁*,* is determined in step a) such that an interval of time [*t_{2'}*, *t*₂] is sufficient for establishing said requirements, in particular said minimum charge level and/or maximum charge level, for said at least one of the rechargeable electric storage units;
iii) determining first specifications related to the auxiliary services for the interval of time [*t*₁, *t*_{2'}]*,* and second specifications related to the auxiliary services for the interval of time [*t*_{2'}, *t*₂] in step b); and
during the interval of time [*t*₁, *t*_{2'}]*,* ancillary grid services are provided in accordance with the first specifications; and during the interval of time [*t_{2'}*, *t*₂] ancillary grid services are provided in accordance with the second specifications, such that the at least one requirement for the at least one of the rechargeable electric storage units is met at *t*₂.

By subdividing the interval of time [*t*₁, *t*₂] into a first subinterval [*t*₁, *t*_{2'}] and a second subinterval [*t_{2'}*, *t*₂], ancillary grid services may provided in accordance with the first specifications during the first subinterval; and in accordance with the second specifications during the second subinterval. The time *t*_{2'} may, in particular, be determined individually for each of the rechargeable electric storage units from the first subset S₁ and/or the second subset S₂. This makes it possible to optimize and/or maximize a contribution of each of the rechargeable electric storage units to the provision of ancillary grid services during the first subinterval; while nevertheless allowing to ensure that they may be charged to a sufficient extent during the second subinterval, where said sufficient extent is, in particular, determined based on the primary task to be fulfilled after the interval of time, in particular during an interval of time [*t*₂, *t*₃]; in particular by an asset on or as part of which the respective rechargeable electric storage unit is provided.

An advantageous response to this situation is to utilize a mathematical optimization based decision-making system that preferably keeps track of the overall condition of the set S and preferably is able to decide how much aggregate capacity can and/or should be offered for ancillary service provision for the next bidding period and how this duty may and/or should be distributed over the individual rechargeable electric storage units, and/or the individual assets, in particular public transport vehicles, during actual operation. Preferably, the mathematical optimization based decision-making system is configured to determine times *t*_{2'} for subdividing the interval of time [*t*₁, *t*₂] into a first subinterval [*t*₁, *t*_{2'}] and a second subinterval [*t_{2'}*, *t*₂] individually for one or more of the rechargeable electric storage units.

Unless stated otherwise, it shall be assumed throughout this entire document that a statement a ≈ *b* implies that |*a-b*|/(|*a*|+|*b*|) < 10⁻¹, preferably |*a-b*|/(|*a*|+|*b*|) < 10⁻², wherein a and *b* may represent arbitrary variables as described and/or defined anywhere in this document, or as otherwise known to a person skilled in the art. Further, a statement that *a* is at least approximately equal or at least approximately identical to *b* implies that *a* ≈ *b,* preferably *a* = *b.* Further, unless stated otherwise, it shall assumed throughout this entire document that a statement *a* >> *b* implies that *a* > 10b, preferably *a* > 100b; and statement *a* << *b* implies that 10*a* < *b*, preferably 100a < *b.*

The present disclosure also includes embodiments with any combination of features which are mentioned or shown above and/or below, in various embodiments or variants. It also includes individual features as shown in the Figures, even if they are shown there in connection with other features and/or are not mentioned above or below. The disclosure comprises embodiments which exclusively comprise the features described in the claims or the exemplary embodiments, as well as those which comprise additional other features.

The above and other aspects of the invention will become apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings, of which:
Fig. 1 shows an exemplary embodiment of a system according to the present invention;
Fig. 2 shows another exemplary embodiment of the system according to the present invention.

### DETAILED DESCRIPTION OF EXEMPLARY EMBODIMENTS

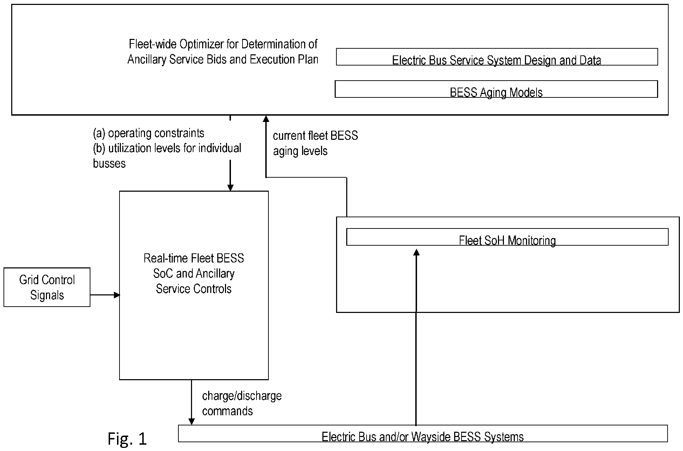

Fig. 1 shows an exemplary embodiment of a system for operating an ensemble of electric assets, namely a fleet of battery powered buses for public transportation purposes as primary purpose, in accordance with the present invention, and illustrates an exemplary variant of the method in accordance with the present invention.

A fleet-wide optimizer is foreseen as a planning unit, and configured for determination of ancillary service bids and execution plan. The fleet-wide optimizer is configured to take into consideration system design and data related to the electric bus service, and ageing models for the battery based electric storage system (BESS) as represented by the electrochemical batteries powering the fleet of buses, and comprising both on-board batteries as well as wayside batteries for flash charging of the on-board batteries. The fleet-wide optimizer solves an optimization problem, with the objective of maximizing net benefit, in particular revenues, from the offering of ancillary services and with the constraint of satisfying both current and end of life service requirements by taking into account the cumulative effects of BESS aging. Decision variables are a level of ancillary service to be provided and how this ancillary service is distributed over the individual BESS assets. Additional information that is used in determining the optimal values for the decision variables may include, but is not limited to (i) current state of health (SoH) of the BESS in the fleet, (ii) battery aging models for forecasting the impact of offered ancillary services on BESS aging, (iii) expected impact of a given level of ancillary service provision on operational requirements and on BESS aging based on statistics of grid control signals or other related measurements such as grid frequency, and (iv) information about system design and requirements, (v) bus maintenance schedule or any other planned down-time, and any other relevant physical information about the system and its constituents. The fleet-wide optimizer will receive data from SoH monitoring and from power grid operations. It will compute the most favorable participation level for bidding in the ancillary services market and possibly the bid price and interact with the markets or with an aggregator for the bidding. If the bid is accepted, the optimization results will be handed over as a plan to be followed by the real-time controls unit. This plan includes how the individual electrical buses are dispatched over a day to meet timetable duties or to stay in depot to provide ancillary services. The optimizer will also provide a baseline consumption trajectory to grid operators or aggregators as part of the plan.

Real-time fleet BESS state of charge (SoC) and ancillary service controls are provided as control unit, and control based on the following considerations: For normal operation, i.e. while performing their primary task, the electrical buses and wayside BESS can maintain their SoC based on a pre-determined set of rules. A central dispatch system can be used to manage the SoC in a more favorable way by controlling SoC over the whole fleet according to some external influence such as variable electricity pricing or disruptions in operations due to failures or other disturbances. If ancillary services are to be provided, a real time control unit becomes a requirement. This unit is to track a control signal from the grid operator and decide on the charging/discharging actions from the BESS in the fleet to track the control signal. This control unit can be operating in an optimal control design setting and it could trade off two or more of the following criteria: i) a degree of satisfaction of the ancillary service commitments, ii) the requirements and the timetable of the public transportation, iii) thermal requirements: comfort / acceptable temperature of the cabin, target temperature of equipment such as the batteries (in this way also impacting the ageing) iv) other stress factors that influence the battery ageing, e.g. SoC, depth of discharge or charge rate, v) cost of energy by artificially deteriorating the efficiency of the equipment and thus releasing energy to the environment. It could - in an extreme example- decide to reduce the charging power or charging duration at a flash feeding station with a BESS to allow the provision of ancillary services by temporarily issuing a reduction of HVAC services until the next bus stop with a flash feeding station. This optimal control setting could also allow to adjust the responses to the control signal within allowed limits to for example reduce the aging impact of the additional charging/discharging on the BESS in the fleet. In this way, the control unit is analogous to SoC control units in other grid interfaced BESS applications. As known to experts, the SoC algorithms can be designed to utilize baseline adjustments via energy trading or balance groups to avoid too low or too high SoC conditions. This control unit is also assumed to have the same capability.

Fleet SoH monitoring acts as a monitoring unit, operates to gather SoH information from all individual constituents of the BESS provided on or as part of the fleet. If possible, regular SoH detection tests can be carried out and the SoH monitoring unit keeps track of when the tests are scheduled. It also evaluates test results and determines SoH. The SoH monitoring unit also gathers data from BESS and uses data analytics to deduce the SoH for the units from normal operating data.

The fleet-wide optimizer communicates operating constraints and/or utilization levels for individual buses to the real-time fleet Bess SoC and ancillary service controls. Based on these and on grid control signals received from, e.g., the grid operator, the real-time fleet BESS SoC and ancillary service controls send charge and/or discharge commands to batteries constituting the BESS, comprising on-board batteries and/or wayside batteries. Fleet SoH monitoring obtains data from batteries constituting the BESS, and extracts current fleet BESS aging levels, and communicates the latter to the fleet-wide optimizer.

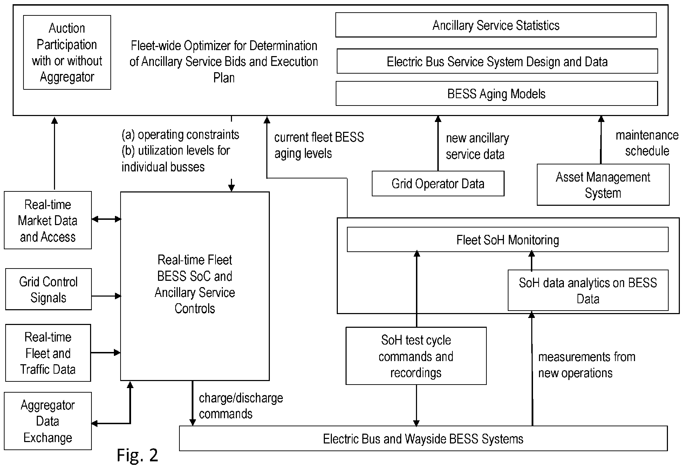

Fig. 2 shows another exemplary embodiment of a system for operating an ensemble of electric assets, namely a fleet of battery powered buses for public transportation purposes as primary purpose, in accordance with the present invention, and illustrates an exemplary variant of the method in accordance with the present invention in more detail.

In addition to the aspects as laid out above, an asset management system, in particular, may be foreseen which can provide a bus and/or infrastructure maintenance schedule and/or other expected down-time to the fleet-wide optimizer. The latter can take this into account when optimizing the bidding and dispatching of bus batteries for ancillary services or for normal operations. Preferably, in particular if there is some flexibility in the maintenance schedule (e.g. a time window within which the bus needs to go through maintenance operations), this can also be exploited by the fleet optimizer and fed back to the asset management system.

Preferred embodiments of the present invention, in particular as described above, may be realized as detailed in the items listed below, advantageously in combination with one or more of the features as detailed above.
1) A method for operating an ensemble of electric assets powered by a set S of rechargeable electric storage units, said assets being configured to perform a primary purpose, preferably unrelated to storage or provision of electric energy, in particular a transportation task, according to a pre-determined schedule, the method including the steps of
   a) selecting, at a time *t*₀, based on the schedule, a first subset S₁ of the rechargeable electric storage units for providing ancillary grid services to a grid operator during an interval of time [*t*₁, *t*₂] in a future of to;
   b) determining, based on properties of the subset S₁, related to the ancillary services;
   c) communicating said specifications to a grid operator;
   d) during the interval of time [*t*₁, *t*₂], providing ancillary grid services in accordance with the specifications, wherein at least a second subset S₂ of rechargeable electric storage units, said second subset being a subset of the first subset S₁, preferably being identical to the first subset, is used to store or supply electric energy.
2) The method according to item1, further comprising the step of taking into account a state of health, in particular a remaining expected lifetime, for each electric storage unit of a third subset S₃ of electric storage units, preferably all rechargeable electric storage units, in the selection in step a) of item 1).
3) The method according to the previous item, further comprising taking into account an expected influence of the provision of ancillary services in accordance with the specifications on the states of health, in particular onto a remaining expected lifetime, of storage units from the first subset S1 in the selection of the subset S1, and/or in determining the specifications related to the ancillary services.
4) The method according to one of the previous items, wherein the primary purpose is related to transportation, illumination, heating, mechanical processing of substances, materials, food, etc.
5) The method according to one of the previous items, wherein *t*₁ - *t*₀ > 1d, preferably *t*₁ - *t*₀ > 1 week, and/or wherein *t*₁ - *t*₀ *> t*₂ *- t*₁*,* preferably *t*₁ - *t*₀ >> *t*₂ - *t*₁*.*
6) The method according to one of the previous items, wherein the schedule comprises, preferably consists of, a number *N* of points in time *T*₁ < *T*₂ < ... < *T_{N}*, at which events related to the primary purpose are scheduled to occur, and wherein *t*₁ is chosen according to *t*₁ = *T*ₙ, and *t*₂ = *T*ₙ₊₁ with *n* ∈ {1;...; *N*-1}; and preferably *t*₃ = *T*ₙ₊₂ with *n* ∈ {1;...; *N-*2}.
7) The method according to the previous item, wherein the schedule is periodic, i.e. where in particular *T_{N} = T*₁ + 1h; *T_{N} = T*₁ + 1d; *T_{N}* = *T*₁ + 1week; *T_{N}* = *T*₁ + 1 month.
8) The method according to one of the previous items, further characterized in that steps a), b), c) and e) according to item 1 are repeated for at least one further interval of time [*t*_{1*}, *t*_{2*}] with *t*_{1*} = *T*_{n*}, and *t*_{2*} = *T*_{n*+1} with *n** ∈ {1;...; *N-*1}\{n}, i.e., in particular *n** ≠ *n;* and during the interval of time [*t*₁*, *t*_{2*}] ancillary grid services are provided in accordance with the respective specifications, wherein at least a further second subset S_{2*} of rechargeable electric storage units, said further second subset being a subset of the first subset S₁, preferably being identical to the first subset, is used to store or supply electric energy.
9) The method according to one of the previous items, further characterized in that steps a), b), c) and e) according to item 1 are executed for each interval of time [*Tₙ*, *T*_{*n*+1}] with *n* ∈ {1;...; *N*-1}.
10)The method according to one of the previous items, further characterized in that
   a) in step a),
      i) requirements for at least one of the rechargeable electric storage units from the first subset S₁, in particular a minimum charge level and/or maximum charge level required at *t*₂ are determined from specifications related to the primary purpose;
      ii) a time *t*_{2'} with *t*₁< *t_{2'}< t₂,* preferably with *t₂- t*_{2'} *< t_{2'}- t*₁, is determined such that an interval of time [*t_{2'}*, *t*₂] is sufficient for establishing said requirements
   b) in step b), determining first specifications related to the auxiliary services for the interval of time [*t*₁, *t*_{2'}]*,* and second specifications related to the auxiliary services for the interval of time [*t_{2'}*, *t*₂];
   c) during the interval of time [*t*₁, *t*_{2'}]*,* providing ancillary grid services in accordance with the first specifications; and during the interval of time [*t_{2'}*, *t*₂] providing ancillary grid services in accordance with the second specifications, such that the at least one requirement for the at least one of the rechargeable electric storage units is met at *t*₂.
11)The method according to one of the previous items, wherein the ensemble of electric devices/assets is a fleet of public transport vehicles, in particular battery operated buses, and the rechargeable electric storage units are electrochemical batteries, comprising in particular on-board batteries arranged in the public transport vehicles and/or wayside batteries arranged at stops served by the public transport vehicles.
12)The method according to one of the previous items, wherein in step b) of item 1, an optimization problem is solved, said optimization problem having the objective of maximizing revenues from providing ancillary grid services, wherein effects of ageing of the rechargeable electric storage units, in particular cumulative ageing, are preferably taken into account, in particular through a constraint related to current and/or end-of-life service requirements, or by accounting for the effect of ageing in the objective function of the optimization.
13)The method according to the previous item, wherein values for decision variables indicative of the specifications related to the auxiliary services are determined in solving the optimization problem; said decision variables being, in particular, indicative of a level of ancillary service to be provided and how said ancillary service is to be distributed over the individual rechargeable electric storage units.
14)The method according to one of the previous items, whereas, in determining values for the decision variables,
   a) current state of health of at least some of the plurality of rechargeable electric storage units,
   b) aging models for forecasting the impact of offered ancillary services on aging of the rechargeable electric storage units,
   c) expected impact of a given level of ancillary service provision on operational requirements and on aging of the rechargeable electric storage units based on statistics of grid control signals or other related measurements such as grid frequency,
   d) information about system design and requirements, and/or
   e) electric device/asset maintenance schedule or any other planned down-time,
   are taken into account.
15)The method according to one of the previous items, wherein in step d) of item 1, ancillary grid services are provided under control of a real-time control unit, said control unit configured to track a control signal from the grid operator and decide on charging/discharging actions to be executed by electric storage units from the second subset S₂ of rechargeable electric storage units.
16)The method according to the previous item, wherein the real-time control unit is configured to operate in an optimal control design setting.
17) The method according to one of the previous items, wherein regular state of health tests are carried out for at least some of the rechargeable electric storage units.
18)The method according to one of the previous items, wherein in step a) of item 1, a maintenance schedule for and/or expected down-times for at least one, preferably all of the electric assets is taken into account, and preferably adapted.
19)The method according to one of the previous items, characterized in that it is performed in a receding horizon fashion.
20)A system for operating an ensemble of electric assets powered by a set S of rechargeable electric storage units, said assets being configured to perform a primary purpose, preferably unrelated to storage or provision of electric energy, in particular a transportation task, according to a pre-determined schedule, the system comprising
   a) a planning unit or system, in particular comprising an ensemble-wide optimizer, configured to
      i) select, at a time *t*₀, based on the schedule, a first subset S₁ of the rechargeable electric storage units for providing ancillary grid services to a grid operator during an interval of time [*t*₁, *t*₂] in a future of to;
      ii) determine, based on properties of the subset S₁, related to the ancillary services; and
      iii) communicate said specifications to a grid operator;
   b) a control system or unit, preferably a real-time control system or unit configured to
      i) provide ancillary grid services in accordance with the specifications during the interval of time [*t*₁, *t*₂], wherein at least a second subset S₂ of rechargeable electric storage units, said second subset being a subset of the first subset S₁, preferably being identical to the first subset, is used to store or supply electric energy, wherein
   c) a monitoring system or unit, preferably a real-time monitoring system or unit, configured to
      i) monitor a state of health for each electric storage unit of a third subset S₃ of electric storage units, preferably all electric storage units, and
      ii) provide information related to state of health to the planning unit or system.
21) The system according to the previous item, wherein the planning unit or system is configured to take into account state of health information provided by the monitoring system or unit in the selection of the first subset S₁ of the rechargeable electric storage units.
22) The system according to one of items 20 to 21, wherein the control system or unit, preferably a real-time control system or unit is configured to control state of charge of at least some, preferably all rechargeable electric storage units belonging to the set S but not to the second subset S₂, i.e. from S\S₂ during the interval of time [*t*₁, *t*₂], and/or state of charge of at least some, preferably all rechargeable electric storage units belonging to the set S during at least some time outside the interval of time [*t*₁, *t*₂], in particular during an interval [*t*₂, *t*₃]*.*

## Claims

1. A method for operating an ensemble of electric assets powered by a set S of rechargeable electric storage units, said assets being configured to perform a primary purpose, unrelated to storage or provision of electric energy, in particular a transportation task, according to a pre-determined schedule, the method including the steps of
a) selecting, at a time *t*₀, based on the schedule, a first subset S₁ of the rechargeable electric storage units for providing ancillary grid services to a grid operator during an interval of time [*t*₁, *t*₂] in a future of to;
b) determining, based on properties of the subset S₁, related to the ancillary services;
c) communicating said specifications to a grid operator;
d) during the interval of time [*t*₁, *t*₂], providing ancillary grid services in accordance with the specifications, wherein at least a second subset S₂ of rechargeable electric storage units, said second subset being a subset of the first subset S₁, preferably being identical to the first subset, is used to store or supply electric energy, wherein
e) a state of health, in particular a remaining expected lifetime, for each electric storage unit of a third subset S₃ of electric storage units, preferably all rechargeable electric storage units, is taken into account in the selection in step a).

2. The method according to the previous claim, further comprising taking into account an expected influence of the provision of ancillary services in accordance with the specifications on the states of health, in particular onto a remaining expected lifetime, of storage units from the first subset S1 in the selection of the subset S1, and/or in determining the specifications related to the ancillary services.

3. The method according to one of the previous claims, wherein *t*₁ - *t*₀ > 1d, preferably *t*₁ - *t*₀ > 1 week, and/or wherein *t*₁ - *t*₀ *> t*₂ *- t*₁*,* preferably *t*₁ - *t*₀ >> *t₂* - *t*₁*.*

4. The method according to one of the previous claims, wherein the schedule comprises, preferably consists of, a number N of points in time *T*₁ < *T*₂ < ... < *T_{N}*, at which events related to the primary purpose are scheduled to occur, and wherein *t*₁ is chosen according to *t*₁ = *T*ₙ, and *t₂* = *T*ₙ₊₁ with *n* ∈ {1;...; *N*-1}; and preferably *t*₃ = *T*ₙ₊₂ with *n* ∈ {1;...; *N-*2}.

5. The method according to claim 4, further **characterized in that** steps a), b), c) and e) according to claim 1 are repeated for at least one further interval of time [*t*₁*, *t*_{2*}] with *t*₁* = *T*_{n*}, and *t*_{2*} = *T*_{n*+1} with *n** ∈ {1;...; *N*-1}\{*n*}, i.e., in particular *n* ≠ n; and* during the interval of time [*t*₁*, *t*_{2*}] ancillary grid services are provided in accordance with the respective specifications, wherein at least a further second subset S_{2*} of rechargeable electric storage units, said further second subset being a subset of the first subset S₁, preferably being identical to the first subset, is used to store or supply electric energy.

6. The method according to claim 4 or 5, further **characterized in that** steps a), b), c) and e) according to claim 1 are executed for each interval of time [*T*ₙ, *T*_{*n*+1}] with *n* ∈ {1;...; *N*-1}.

7. The method according to one of the previous claims, further **characterized in that**
a) in step a),
i) requirements for at least one of the rechargeable electric storage units from the first subset S₁, in particular a minimum charge level and/or maximum charge level required at *t*₂ are determined from specifications related to the primary purpose;
ii) a time *t*_{2'} with *t*₁< *t_{2'}*< *t*₂, preferably with *t*₂*- t*_{2'} *< t*₂*_{'}- t*₁*,* is determined such that an interval of time [*t_{2'}*, *t*₂] is sufficient for establishing said requirements
b) in step b), determining first specifications related to the auxiliary services for the interval of time [*t*₁*, t*_{2'}]*,* and second specifications related to the auxiliary services for the interval of time [*t_{2'}*, *t*₂];
c) during the interval of time [*t*₁, *t*_{2'}]*,* providing ancillary grid services in accordance with the first specifications; and during the interval of time [*t*_{2'}, *t*₂] providing ancillary grid services in accordance with the second specifications, such that the at least one requirement for the at least one of the rechargeable electric storage units is met at *t*₂.

8. The method according to one of the previous claims, wherein the ensemble of electric devices/assets is a fleet of public transport vehicles, in particular battery operated buses, and the rechargeable electric storage units are electrochemical batteries, comprising in particular on-board batteries arranged in the public transport vehicles and/or wayside batteries arranged at stops served by the public transport vehicles.

9. The method according to one of the previous claims, wherein in step b) of claim 1, an optimization problem is solved, said optimization problem having the objective of maximizing revenues from providing ancillary grid services, wherein effects of ageing of the rechargeable electric storage units, in particular cumulative ageing, are preferably taken into account, in particular through a constraint related to current and/or end-of-life service requirements, or by accounting for the effect of ageing in the objective function of the optimization.

10. The method according to the previous claim, wherein values for decision variables indicative of the specifications related to the auxiliary services are determined in solving the optimization problem; said decision variables being, in particular, indicative of a level of ancillary service to be provided and how said ancillary service is to be distributed over the individual rechargeable electric storage units.

11. The method according to one of the previous claims, whereas, in determining values for the decision variables,
f) current state of health of at least some of the plurality of rechargeable electric storage units,
g) aging models for forecasting the impact of offered ancillary services on aging of the rechargeable electric storage units,
h) expected impact of a given level of ancillary service provision on operational requirements and on aging of the rechargeable electric storage units based on statistics of grid control signals or other related measurements such as grid frequency,
i) information about system design and requirements, and/or
j) electric device/asset maintenance schedule or any other planned down-time,
are taken into account.

12. The method according to one of the previous claims, wherein in step d) of claim 1, ancillary grid services are provided under control of a real-time control unit, said control unit configured to track a control signal from the grid operator and decide on charging/discharging actions to be executed by electric storage units from the second subset S₂ of rechargeable electric storage units.

13. The method according to one of the previous claims, wherein regular state of health tests are carried out for at least some of the rechargeable electric storage units.

14. The method according to one of the previous claims, wherein in step a) of claim 1, a maintenance schedule for and/or expected down-times for at least one, preferably all of the electric assets is taken into account, and preferably adapted.

15. A system for operating an ensemble of electric assets powered by a set S of rechargeable electric storage units, said assets being configured to perform a primary purpose, preferably unrelated to storage or provision of electric energy, in particular a transportation task, according to a pre-determined schedule, the system comprising
a) a planning unit or system, in particular comprising an ensemble-wide optimizer, configured to
i) select, at a time *t*₀, based on the schedule, a first subset S₁ of the rechargeable electric storage units for providing ancillary grid services to a grid operator during an interval of time [*t*₁, *t*₂] in a future of *t*₀;
ii) determine, based on properties of the subset S₁, related to the ancillary services; and
iii) communicate said specifications to a grid operator;
b) a control system or unit, preferably a real-time control system or unit configured to
i) provide ancillary grid services in accordance with the specifications during the interval of time [*t*₁, *t*₂], wherein at least a second subset S₂ of rechargeable electric storage units, said second subset being a subset of the first subset S₁, preferably being identical to the first subset, is used to store or supply electric energy; wherein
c) a monitoring system or unit, preferably a real-time monitoring system or unit, configured to
i) monitor a state of health for each electric storage unit of a third subset S₃ of electric storage units, preferably all electric storage units, and
ii) provide information related to state of health to the planning unit or system.
